# EUROPEAN PATENT SPECIFICATION

(11) **EP 2 150 500 B1**
(45) Date of publication and mention of the grant of the patent: **16.03.2011**
(21) Application number: 08763469.7
(22) Date of filing: 22.05.2008
(51) Int. Cl.: C02F 1/463, C02F 1/461, C02F 1/467

(54) **AN ELECTROCOAGULATION CELL**
ELEKTROKOAGULATIONSZELLE
CELLULE D'ÉLECTROCOAGULATION

(30) Priority: 31.05.2007 IE 20070396
(43) Date of publication of application: 10.02.2010
(73) Proprietor: Enva Ireland Ltd., County Laois (IE)
(72) Inventor: HOLLAND, Frank, Stanley, Stockport SK7 6LB (GB)
(74) Representative: Ryan, John Mary
(86) International application number: PCT/IE2008/000059
(87) International publication number: WO 2008/146268

(56) References cited:
- US-A- 857 277
- US-A- 3 006 826

## Description

### Technical Field

This invention relates to an electrocoagulation cell and, in particular, to an electrocoagulation cell for use in industrial processes such as the treatment of liquid waste.

### Background Art

Electrocoagulation is an electrolytic treatment process for separating and removing a broad range of contaminants including metals, solids, pathogens and other undesirable substances from a solution. Typically, an electrocoagulation cell contains electrodes and an electrolyte that is to be treated. The treatment process may be performed in a number of ways depending on the nature of the electrolyte.

U.S. Patent No. 6,139,710 describes an electrocoagulation cell wherein a multitude of substantially parallel electrodes are mounted in a flow path of the solution to be subjected to electrolysis. The electrodes are both monopolar (anodic or cathodic) and bipolar (anodic and cathodic). Bipolar electrodes have both surfaces of the electrode reacting with the electrolyte solution, one side being anodic and the other side being cathodic. Monopolar electrodes are either wholly anodic or wholly cathodic. An electric potential or current is applied to two or more electrodes. The connected electrodes are monopolar and hence are either anionic or cationic depending on the polarity of the power to be applied to the electrodes. At least one bipolar electrode is inserted between monopolar electrodes.

The purpose of the multi-electrode cell design is to force current to flow through the solution between the respective electrodes in the cell. However, those skilled in the art will appreciate that at the entry and exit ends of the monopolar electrodes, which are at different electrical potential, the electrolyte surrounding the monopolar electrode ends forms a conductive bridge which enables current to bypass the bipolar electrodes and form a short-circuit from the monopolar electrode at high potential to the monopolar electrode at low potential. This short-circuiting between monopolar electrodes leads to non-uniform corrosion of the intermediate bipolar electrodes and substantially reduces the efficiency of the electrocoagulation cell.

In addition, the monopolar electrodes of the electrocoagulation cell make use of wire connections which are space inefficient, in particular if the cell contains a large number of monopolar electrodes, such as illustrated in Fig. 1 of U.S. Patent No. 6,139,710. Indeed, the space requirements associated with the wire connections for such a large number of electrodes would render the electrocoagulation cell illustrated in Fig. 1 of U.S. Patent No. 6,139,710 impractical.

International Publication No. WO 2004/046051 also describes an electrocoagulation cell wherein a multitude of substantially parallel electrodes is mounted in a flow path of the solution to be subjected to electrolysis. The electrodes are monopolar or bipolar with the monopolar electrodes of the same polarity being connected by an elongate busbar which extends through an aperture located in a tab extending upwardly from an adjacent top edge of each monopolar electrode. As the cell comprises both monopolar and bipolar electrodes, it also suffers the disadvantage of short-circuiting of current between monopolar electrodes.

The overall resistance across any electrical connection is a result of the contact resistance and the streamline effect across the electrical connection. The contact area of the electrical connection, the materials of the conductors of the connection, including oxide layers, and the force applied to the connection are all parameters which affect the contact resistance. When the two conductors at an electrical connection are mated together, it is well known that the points of actual contact are relatively few due to high and low points on each conductor. The increase in resistance caused by funnelling current through the restricted contact area is referred to as the streamline effect. Therefore, the resistance across an electrical connection increases according to the increase in the streamline effect. It will be apparent that the greater the resistance across the electrical connection, the greater the voltage drop across the electrical connection will be, resulting in a consequent loss of useful power.

Fig. 3a of International Publication No. WO 2004/046051 illustrates a high current density bus arrangement wherein a threaded busbar is mated with selected electrodes of an electrocoagulation cell and secured in place by nuts disposed on the busbar and on either side of each electrode. However, a high drop in voltage occurs across the connection, most likely due to a low number of contact points between the threaded busbar/nuts assembly and the electrodes resulting in high resistance across the connection. The high voltage drop across the connection adversely affects the efficiency of the cell. In addition, as a consequence of the high resistance across the connection, the threaded busbar/nuts assembly is likely to become extremely hot during operation of the cell.

Both of the electrocoagulation cells described above utilise a similar spacing system to maintain separation between electrodes. The electrodes are shaped to fit into individual grooves within the cell housing, as illustrated in Fig. 2 of U.S. Patent No. 6,139,710. However, inserting and removing the electrodes using this spacing system is likely, at times, to cause jamming of the electrodes in the individual grooves.

An alternative spacing system is illustrated in Fig. 7 of U.S. Patent No. 6,139,710 wherein the electrodes are interconnected and maintained in a spaced relationship by a plurality of non-conductive rods. However, the spacing system could fail during operation of the cell as the electrode material surrounding the non-conductive rods is corroded.

The Morselt Redbox (Trade Mark of Morselt Borne B.V., Gildestraat 12, 7622 AC Borne, The Netherlands) is an electrocoagulation cell wherein a multitude of substantially parallel electrodes is mounted in an electrocoagulation cell. The electrodes are monopolar and are connected to a power supply by wire connections. As with U.S. Patent No. 6,139,710, the wire connections are space inefficient thereby limiting the number of electrodes that can be housed in the cell. In addition, during operation of the cell, these wire connections must be protected from splashing liquid or foaming thus limiting the amount of available space even further. The lesser the number of electrodes in the electrocoagulation cell, the lesser the surface area made available for electrocoagulation to occur within a given volume.

U.S. Patent Publication No. 2003/0024809 describes an electrolytic cell for the chlorination of the water in a swimming pool wherein a multitude of substantially parallel electrodes are mounted in a flow path of the water to be chlorinated. The electrodes are monopolar (anodic or cathodic). However, it is clear from Fig. 3 of U.S. Patent Publication No. 2003/0024809 that the electrical connection system of the electrolytic cell appears to be immersed or is, at the very least, at the level of electrolyte. The electrical connection system is thus extremely susceptible to extensive wetting which leads to rapid corrosion of the electrically conductive spacers and an associated decrease in the performance of the cell.

The spacing system described in U.S. Patent Publication No. 2003/0024809 involves the use of non-conducting threaded rods that pass through every electrode and having non-conductive spacers disposed thereon and between each pair of adjacent electrodes. This spacing system is suitable for the application disclosed in U.S. Patent Publication No. 2003/0024809, namely chlorination of a relatively small volume of water by placement of a pre-assembled electrode cartridge into commonly available plastic pipe through which the water to be treated passes. However, pre-assembly of an electrode cartridge is not suitable for the treatment of water or other solutions on a large scale.

German Patent Publication No. DE 29 01 850 describes an electrolytic cell for the treatment of effluent. The cathodes are connected to a power supply by wire connections. As with the electrocoagulation cell of U.S. Patent No. 6,139,710, the wire connections are space inefficient thereby limiting the number of electrodes that can be housed in the cell. The electrical contact to the anodes appears to be via springs which will result in poor electrical contact thereby adversely affecting the efficiency of the cell.

U.S Patent No. 3, 006, 826 describes an electrocoagulation cell, which uses platic sleeves and grease to avoid contact between the conductive bushes and the water. This solution causes severe problems.

The use of the electrocoagulation cells described above for industrial purposes is hindered by their aforementioned limitations. In addition, the maximum current that can be applied to these cells is approximately 300 amps and such a limitation adversely affects the volume of liquid that can be treated effectively in a given time frame.

Thus, there is a need for a more efficient electrocoagulation cell that is capable of being used for industrial purposes and which overcomes the problems of the electrocoagulation cells described herebefore.

### Disclosure of Invention

Accordingly, the invention provides an electrocoagulation cell comprising a reaction chamber, a first and second set of electrodes disposed within the reaction chamber such that the first set of electrodes is interleaved with the second set of electrodes, an electrically conductive bush being disposed between each pair of adjacent electrodes of the same set, the electrodes and electrically conductive bushes of the same set being held in electrical contact with one another by a tie-bar which is extendable through an aperture in each electrode and a co-aligned aperture in each electrically conductive bush, the first set of electrodes being connectable by electrical connection means disposed at the or each end of the tie-bar to one pole of an electrical power supply, the second set of electrodes being connectable by electrical connection means disposed at the or each end of the tie-bar to the opposite pole of the power supply and the conductive bushes being positioned relative to the electrodes so as to avoid contact with liquid contained in the reaction chamber in use

All of the electrodes of the same set are in direct electrical contact with one another and are all monopolar electrodes. Thus, the cell comprises alternate anodic and cathodic electrodes, all of the anodic electrodes being connected to one another and all of the cathodic electrodes being connected to one another. No short-circuiting of current between electrodes occurs as all of the electrodes are monopolar.

The arrangement of the plurality of bushes and tie-bar relative to the electrodes results in a good contact area between the electrically conducting bushes and the electrodes of the same set disposed on either side thereof. Excellent mating between each bush and adjacent electrodes increases the number of contact points at each connection. This provides low resistance across each connection with an associated low voltage drop across each connection. The low voltage drop across each connection minimises power loss from the cell. The mating between each bush and adjacent electrodes also results in even distribution of current across the contact area. In addition, heat generated in the bushes by current flowing therethrough is transferred *via* the increased number of contact points to the electrodes, the electrodes being cooled thereafter by contact with the liquid being treated. The tie-bar provides mechanical support for the electrodes and the bushes, disposed thereon, and is essentially electrically inert during the operation of the electrocoagulation cell.

The electrical connection between the electrodes of the same set eliminates the need for wire connections to each monopolar electrode. The advantages associated with eliminating the requirement for wire connections are three-fold:
i) More space available in the cell - a greater number of electrodes can be disposed within the cell; the greater the number of electrodes in the electrocoagulation cell, the greater the surface area made available for electrocoagulation to occur within a given volume, the greater the efficiency of the cell;
ii) Simplicity - far less complex electrical connection system; ease of assembly and reduction in possibility of errors occurring when connecting multiple electrodes to a power supply; and
iii) Safety - eliminates concerns with having a large number of electrical wire connections in close proximity to a large body of water.

The bushes are made of electrically conductive material which, generally, is corrodible. Corrosion of the bushes by repeated contact with the liquid being treated inevitably reduces the size of the contact area of each bush with the electrodes. A smaller contact area is associated with higher resistance across the connection, with the accompanying disadvantage of a high voltage drop across the connection and greater power loss from the cell. Contact with the liquid being treated is avoided by positioning the bushes relative to the electrodes accordingly, generally at a suitable distance above the level of the liquid being treated.

In one embodiment of the electrocoagulation cell according to the invention, a tightening means is disposed at either or both ends of the tie-bar, which, in use, forces the electrodes against the electrically conductive bushes thereby increasing the electrical contact between the electrodes and the electrically conductive bushes disposed therebetween.

Improved mating between each bush and adjacent electrodes further increases the number of contact points at each connection. This further reduces the resistance across each connection and therefore alto reduces the voltage drop across each connection. The lower voltage drop across each connection minimises power loss from the cell.

In addition, compacting the electrodes and bushes against one another allows a greater number of electrodes to be disposed within the reaction chamber and, as noted previously, the greater the number of electrodes in the electrocoagulation cell, the greater the surface area made available for electrocoagulation to occur within a given volume and the greater the efficiency of the cell.

Preferably, the tie-bar is threaded and the tightening means is a threaded nut.

Further preferably, the tension in the tie-bar is maintained by pressure bushes separated by spring washers.

Still further preferably, the spring washers are Belleville washers.

A Belleville washer is a type of non-flat washer. It has a slight conical shape which gives the washer a spring characteristic. The Belleville washers are employed in this situation to provide a flexible quality to the tie-bar tightening means so as to compensate for any changes in the thickness of the electrodes and/or the electrically conductive bushes along the tie-bar in use.

In a further embodiment of the electrocoagulation cell according to the invention, each bush is a machined metal bush.

Machining the bushes improves mating between each bush and adjacent electrodes thereby further increasing the number of contact points at each connection. This lowers the resistance and, consequently, the voltage drop across each connection. The low voltage drop across each connection minimises power loss from the cell. The improved mating between each bush and adjacent electrodes also results in an improved distribution of current across the contact area.

In a further embodiment of the electrocoagulation cell according to the invention, an additional electrical connection means is disposed at a point along the tie-bar.

There is no limit on the size of an electrocoagulation cell according to the invention and, therefore, a cell can incorporate 60, 70 or even more electrodes. Despite the fact that the voltage drop across each connection, between the electrically conductive bushes and the adjacent electrodes, is low, the cumulative voltage drop across a large number of electrodes can become significant. The electrodes situated furthest from the electrical connection means are unable to draw the same current from the power supply as those electrodes situated closer to the electrical connection means. Positioning one or more additional electrical connections means at selected points along the tie-bar allows each electrode to draw substantially the same current from the power supply.

In a further embodiment of the electrocoagulation cell according to the invention, the first and second sets of electrodes are disposed within the reaction chamber in spaced and parallel relationship relative to one another.

The major concern with regard to the location of the electrodes within the reaction chamber is that the electrodes will not inhibit the flow of a liquid stream through the reaction chambers Consequently, the electrodes are maintained in a spaced relationship relative to one another. The spaces between the electrodes do not necessarily have to be exactly parallel so long as a surface area is provided for contact with the liquid stream, the electrocoagulation process will occur. However, the spaced and parallel relationship avoids choke points or comparatively narrow gaps between electrodes and thus prevents clogging occurring between the electrodes by bridging of solid particles.

Preferably, the first and second sets of electrodes are maintained in space and parallel relationship relative to one another by non-conductive spacers fitted to the electrodes of either the first or second set of electrodes.

Locating the spacers on the electrodes rather than on the walls of the reaction chamber eliminates the problem of jamming of the electrodes in the spacing grooves that are found on the prior art devices. This contributes to the ease of assembly and maintenance of then electrocoagulation cell.

Further preferably, each non-conductive spacer comprises a nut and bolt, the bolt being extendable through a further aperture in an electrode and fastenable by the nut, such that the head, of the bolt acts as a spacer on one side of the electrode and the nut acts as a spacer on the other side of the electrode.

The primary advantage of a spacing system such as this is its innate simplicity. In addition, the spacer containing electrode does not corrode at the areas of the electrode covered by the head of the bolt and the nut and the non-spacer containing electrode does not corrode at the point of contact with the spacer. Thus, the spaced and parallel relationship between adjacent electrodes is maintained no matter what degree of corrosion has occurred on the remainder of the electrode.

Still further preferably, the nut and bolt are constructed from a temperature resistant plastics material.

In a further embodiment of the electrocoagulation cell according to the invention, both sets of electrodes are supported on a non-conductive rod which is extendable through a further aperture in each electrode.

The electrodes are suspended a set distance above the bottom of the reaction chamber so that the tightly compacted electrodes disposed in the reaction chamber do not present an obstruction to the liquid to be treated entering through an inlet located at the bottom of the reaction chamber. In addition, the non-conductive rod prevents the electrodes from sagging as they are corroded.

In a further embodiment of the electrocoagulation cell according to the invention, the contact surfaces of each bush are coatable with contact grease.

Coating the contact surfaces of each bush with contact grease seals the contact area and prevents spray from the liquid being treated from corroding the contact area.

In addition, the contact grease may include an anti-oxide agent which removes oxide layers from the contact surfaces of each bush and the corresponding area on adjacent electrodes and prevents new oxide layers &om forming. Removing any oxide layers present on the contact surfaces of each bush and adjacent electrodes reduces the resistance across each connection and therefore also reduces the voltage drop across each connection. The lower voltage drop across each connection minimises power loss from the cell.

In a further embodiment of the electrocoagulation cell according to the invention, the exposed surface of each bush is covered by a shield.

The generation of gases during the electrocoagulation process causes frothing or foaming in the cell and, on occasion, this foam can rise to contact the bushes causing subsequent corrosion of the bushes as described above. Covering the exposed surface of each bush with a shield further protects each bush from the foam and spray from the liquid being treated

Preferably, the shield is constructed from a temperature resistant plastics material.

In a further embodiment of the electrocoagulation cell according to the invention, the electrical power supply is connectable to conversion means to allow reversal of the polarity of each set of electrodes.

Over time, the cathodic set of electrodes may become coated with a non-conductive coating or scale. This non-conductive coating can be removed from the cathodic set of electrodes by reversing the polarity of the power to both sets of electrodes, the cathodic set of electrodes switching to become the anodic set of electrodes and the anodic set of electrodes switching to become the cathodic set of electrodes.

Preferably, the conversion means is a rectifier.

In a further embodiment of the electrocoagulation cell according to the invention, the first and second sets of electrodes are constructed from corrodible materials.

If the cathodic set of electrodes is constructed from a non-corrodible material, the electrocoagulation process will be temporarily halted when the polarity of the sets of electrodes is reversed. However, when both the first and second set of electrodes is constructed from corrodible materials, the electrocoagulation process will continue when the polarity of the sets of electrodes is reversed.

In a further embodiment of the electrocoagulation cell according to the invention, the polarity of each set of electrodes is reversed at time intervals which are determined by relative rates of corrosion of the sets of electrodes.

Reversing the polarity of each set of electrodes at time intervals means that both sets of electrodes are corroded at the same rate. Thus, maximum use is made of both sets of electrodes. If the sets of electrodes are constructed of different materials, the time intervals are determined by the relative rates of corrosion of the different materials.

Preferably, the time intervals are equal when the first and second sets of electrodes are constructed from the same material.

If both sets of electrodes are constructed of the same material, for example, aluminium, the time intervals will necessarily be equal in order to corrode both sets of electrodes at the same rate.

Alternatively, the time intervals can vary when the first and second sets of electrodes are constructed from different materials.

If both sets of electrodes are constructed from different materials, for example, aluminium and iron respectively the time intervals will necessarily be different in order to corrode both sets of electrodes at the same rate. The relative rate of corrosion of aluminium versus iron determines the time intervals. This allows a mixed metal electrocoagulation process to be carried out in the same cell while ensuring that maximum use is made of both sets of electrodes.

In a further embodiment of the electrocoagulation cell according to the invention, the first set of electrodes is constructed from material selected from of aluminium, iron, steel, zinc, platinum, gold or copper, and the second set of electrodes is constructed from material selected from aluminium, iron, steel, zinc, platinum, gold or copper.

In a further embodiment of the electrocoagulation cell according to the invention, the reaction chamber is connectable to a spray system for suppressing any foaming of liquid contained in the reaction chamber during use.

In use water is sprayed over the surface of the electrocoagulation cell thereby suppressing the foam resulting from the generation of gases by the electrocoagulation process.

It will be appreciated by those skilled in the art that individual electrocoagulation cells are interconnectable with one another. The electrocoagulation cells can be arranged in:
i) Hydraulic series (liquid being treated is transferred consecutively from one cell to the next);
ii) Hydraulic parallel (liquid being treated is transferred to each cell simultaneously);
iii) Electrical series (current is transferred consecutively from one cell to the next); and
iv) Electrical parallel (current is transferred to each cell simultaneously)
or in any combination of i) or ii) with iii) or iv) above.

Arranging the electrocoagulation cells in hydraulic series is particularly useful when passing the liquid to be treated through one electrocoagulation cell is insufficient to remove the contaminants from the liquid.

### Brief Description of the Drawings

Fig. 1 is perspective view of a first embodiment of an electrocoagulation cell in accordance with the invention;
Fig. 2 is a view of some of the component parts of the electrocoagulation cell of Fig. 1, prior to assembly thereof;
Fig. 3a is a perspective view of the electrocoagulation cell of Fig. 1, with a front and side panel removed, to illustrate an initial stage in the assembly of the cell;
Fig 3b is a perspective view of the electrocoagulation cell of Fig. 1, with a front and side panel removed, to illustrate a further stage in the assembly of the cell;
Fig 3c is a perspective view of the electrocoagulation cell of Fig. 1, with a front and side panel removed, to illustrate a still further stage in the assembly of the cell;
Fig 3d is a perspective view of the electrocoagulation cell of Fig. 3c, with an electrode partially cut away;
Fig. 4 is a perspective view of the electrocoagulation cell of Fig. 1, with a front and side panel removed, to illustrate a further stage in the assembly of the cell;
Fig. 5 is a perspective view of the electrocoagulation cell of Fig. 1, with a front and side panel removed, to illustrate the stage in the assembly of the cell when all of the electrodes have been inserted therein;
Fig. 6 is a side elevation of the electrocoagulation cell of Fig. 1, with a hood assembly in position thereon;
Fig. 7 is a schematic representation of the electric circuit of a rectifier to which an electrocoagulation cell, in accordance with the invention is connectable; and
Fig. 8 is a plan view from above of a further embodiment of the invention, in which eight electrocoagulation cells are connected together in use.

### Modes for Carrying Out the Invention

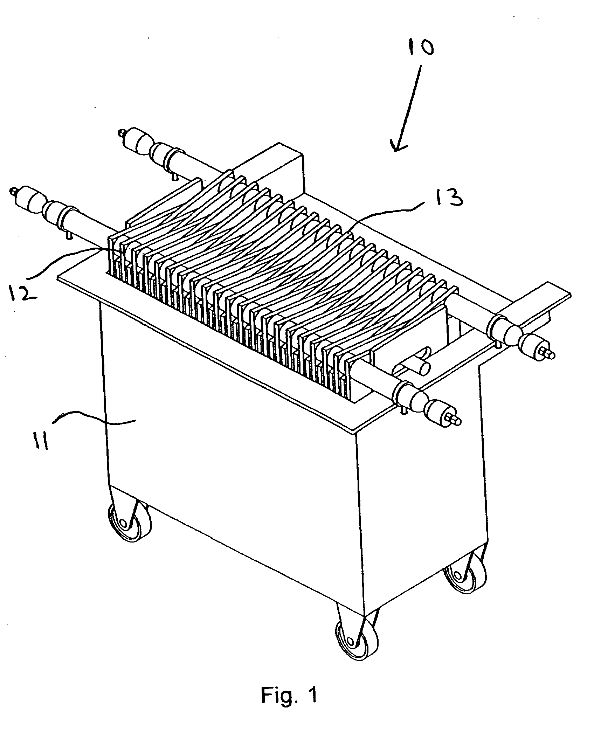

Referring to Fig. 1, there is indicated, generally at 10, an electrocoagulation cell in accordance with the invention, the electrocoagulation cell comprising a reaction chamber 11 and a first and second set of electrodes, 12 and 13 respectively, disposed within the reaction chamber 11 such that the first set of electrodes 12 is interleaved with the second set of electrodes 13.

The electrocoagulation cell 10 according to the invention is best understood by first describing the assembly thereof.

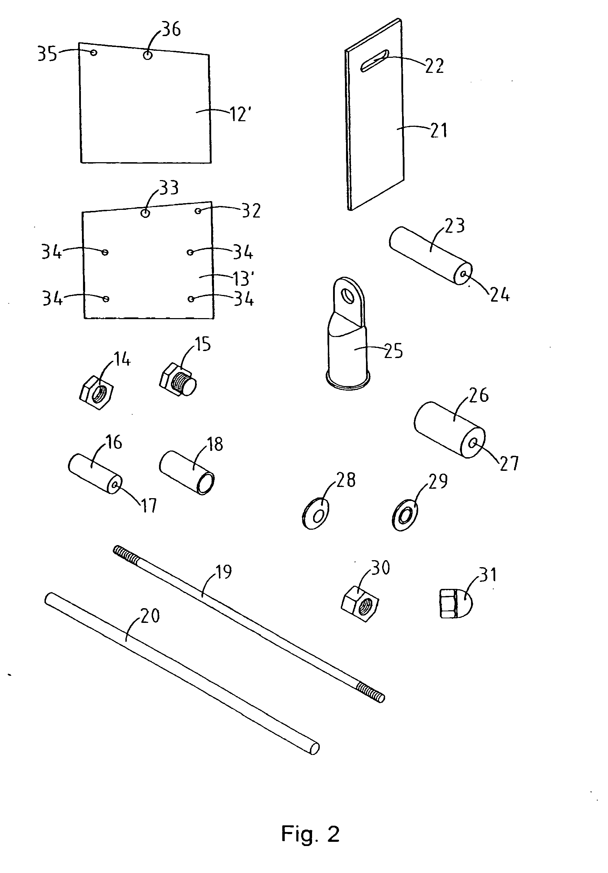

Fig. 2 illustrates the various individual components that comprise the electrocoagulation cell 10, namely, an individual electrode 12' of the first set of electrodes 12, an individual electrode 13' of the second set of electrodes 13, a nylon nut 14 and a nylon bolt 15, an electrically conductive bush 16 having a central aperture 17 therethrough, a polypropylene shield 18, a threaded tie-bar 19, a non-conductive support rod 20, a PVC spacer 21 having an aperture 22 therein, an aluminium feeder bush 23 having a central aperture 24 therethrough, an electrical connector 25, a stainless steel pressure distributor 26 having a central aperture 27 therethrough, a Belleville washer 28, a washer 29, a nut 30, and an end-nut 31.

Prior to assembly, all of the components are thoroughly cleaned. The end surfaces of each electrically conductive bush 16 are coated with contact grease, namely, SGA (Trade Mark) grease distributed by Electrolube (A division of H K Wentworth, Kingsbury Park, Midland Road, Swadlincote, Derbyshire, DE11 0AN, England).

Each individual electrode 13' of the second set of electrodes 13 has a first aperture 32, a second aperture 33 and four identical apertures 34. The electrode 13' is positioned on a worktop such that the first aperture 32 is to the top right hand side of the electrode 13' and a nylon bolt 15 is passed through each of the four identical apertures 34 from below and is secured in place by a nylon nut 14. The head of the nylon bolt 15 acts as a spacer on one side of the electrode 13' and the nylon nut 14 acts as a spacer on the other side of the electrode 13'.

Each individual electrode 12' of the first set of electrodes 12 has a first aperture 35 and a second aperture 36.

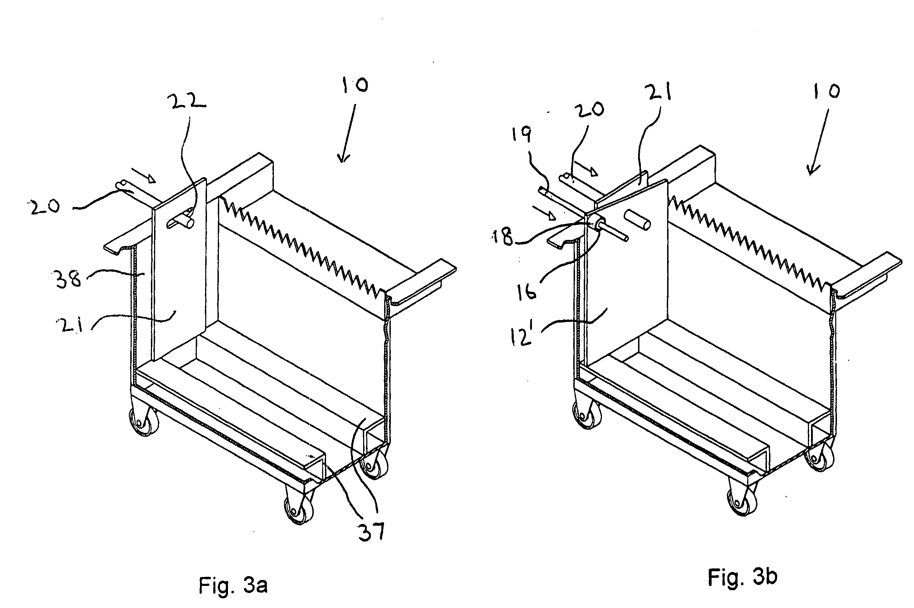

Referring to Fig. 3a, the design of the interior of the reaction chamber 11 incorporates a pair of PVC pedestals 37. The PVC pedestals 37 potentiate the function of the non-conductive support rod 20:
i) To provide mechanical support for the electrodes in the cell; and
ii) To prevent the tightly packed electrodes from obstructing the entry of the liquid being treated through an inlet (not shown) located at lower end of the reaction chamber 11.

Beginning assembly of the electrocoagulation cell 10, a pair of tie-bars 19 (not shown in Fig. 3a) and the non-conductive support rod 20 are laid across the top of the empty reaction chamber 11. A first PVC spacer 21 is positioned tightly against a side wall 38 of the reaction chamber 11 such that the non-conductive support rod 20 extends through the aperture 22 in the PVC spacer 21.

Referring to Fig. 3b, an individual electrode 12' of the first set of electrodes 12 is positioned tightly against the PVC spacer 21 with the tie-bar 19 on the left-hand side of the reaction chamber 11 extending through the first aperture 35 and the non-conductive support rod 20 extending through the second aperture 36. An electrically conductive bush 16 is positioned relative to the electrode 12' by extending the tie-bar 19 through the aperture 17 in the electrically conductive bush 16. A polypropylene shield 18 is then fitted over the electrically conductive bush 16.

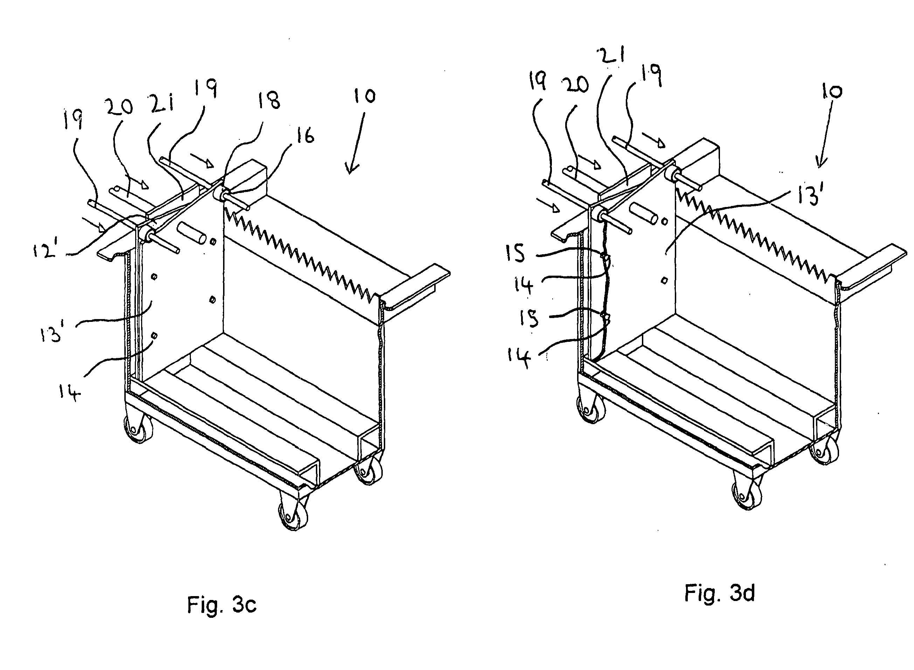

Referring to Fig. 3c, an individual electrode 13' of the second set of electrodes 13 is positioned tightly against the individual electrode 12' already in place with the tie-bar 19 on the right-hand side of the reaction chamber 11 extending through the first aperture 32, and the non-conductive support rod 20 extending through the second aperture 33. As before, an electrically conductive bush 16 is positioned relative to the electrode 13' by extending the tie-bar 19 through the aperture 17 of the electrically conductive bush 16 and a polypropylene shield 18 is fitted over the electrically conductive bush 16.

Fig. 3d illustrates how the nylon nut 14 and nylon bolt 15 act as a spacer between the adjacent electrodes 12' and 13'.

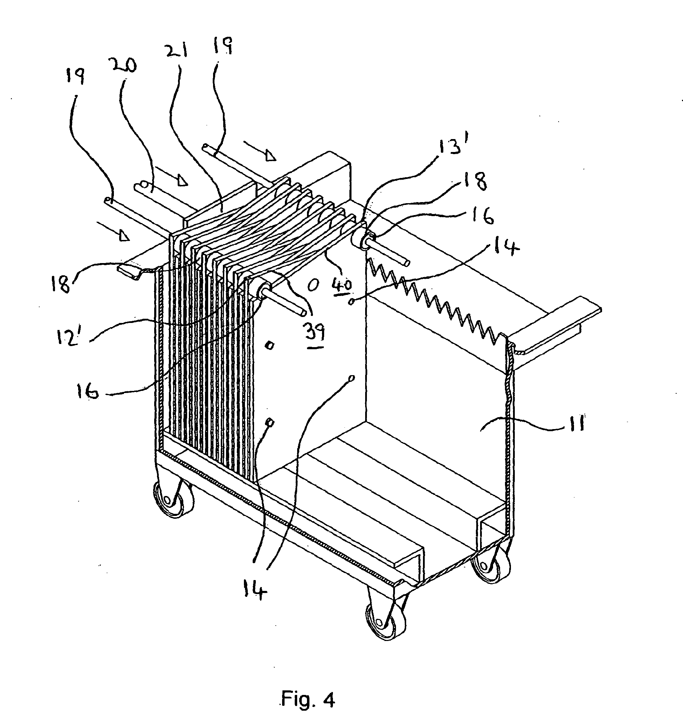

The procedure described above is repeated with individual electrodes 12' and 13' of the first and second set of electrodes 12 and 13, respectively, being disposed on the respective tie-bars 19 in an alternate manner, as illustrated in Fig. 4. The shape of the electrodes 12' and 13', in particular sloping top edges 39, 40, respectively, means that the lowest part of the top edge (not shown) of the electrode 12' of the first set of electrodes 12 lies beneath the electrically conductive bushes 16 disposed between the electrodes 13' of the second set of electrodes 13 and *vice versa.*

The shape of the electrodes 12' and 13' of the electrocoagulation cell 10 makes maximum use of the sheet of metal from which the electrodes are cut as there is not a requirement for an integral tab, which extends above the main body of the electrode, as in some prior-art cells (see U.S. Patent No. 6,139,710 and International Publication No. WO 2004/046051).

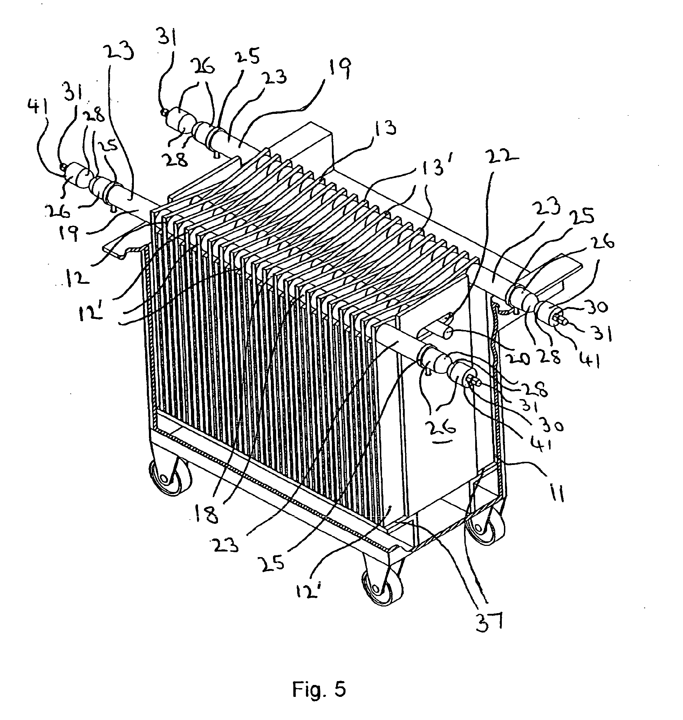

Fig. 5 illustrates the assembled electrocoagulation cell 10. Once the first and second set of electrodes 12, 13 have been disposed within the reaction chamber 11, a second PVC spacer 21 is positioned between the end electrode 12' of the first set of electrodes 12 and an end wall (not shown) of the reaction chamber 11, such that the non-conductive support rod 20 extends through the aperture 22 in the PVC spacer 21. The first and second set of electrodes 12 and 13 are packed so tightly into the reaction chamber 11 that the second PVC spacer 21 only just fits into the reaction chamber 11 and thereby causes further compacting of the first and second set of electrodes 12 and 13 and the electrically conductive bushes 16 disposed between electrodes of the same set.

During assembly of the cell, each tie-bar 19 is extended through the relevant apertures in the respective electrodes and the apertures 17 of the electrically conductive bushes 16 such that ends 41 of each tie-bar 19 extending beyond the electrodes disposed in the reaction chamber 11 are of substantially equal length.

The assembly of the electrocoagulation cell 10 is completed by fitting in turn, to the ends 41 of each tie-bar 19, an aluminium feeder bush 23, an electrical connector 25, a first stainless steel pressure distributor 26, a pair of opposed Belleville washers 28, a second stainless steel pressure distributor 26, a washer (not shown) and a nut 30.

The nut 30 at either end of each tie-bar 19 is tightened until the pair of opposed Belleville washers 28 are almost flat. This improves the mating of the electrically conductive bushes 16 with the electrodes of the same set and ensures that the maximum number of electrodes can be fitted into the reaction chamber 11.

An end-nut 31 is screwed onto each end 41 of each tie-bar 19 in order to protect the threads of each tie-bar 19.

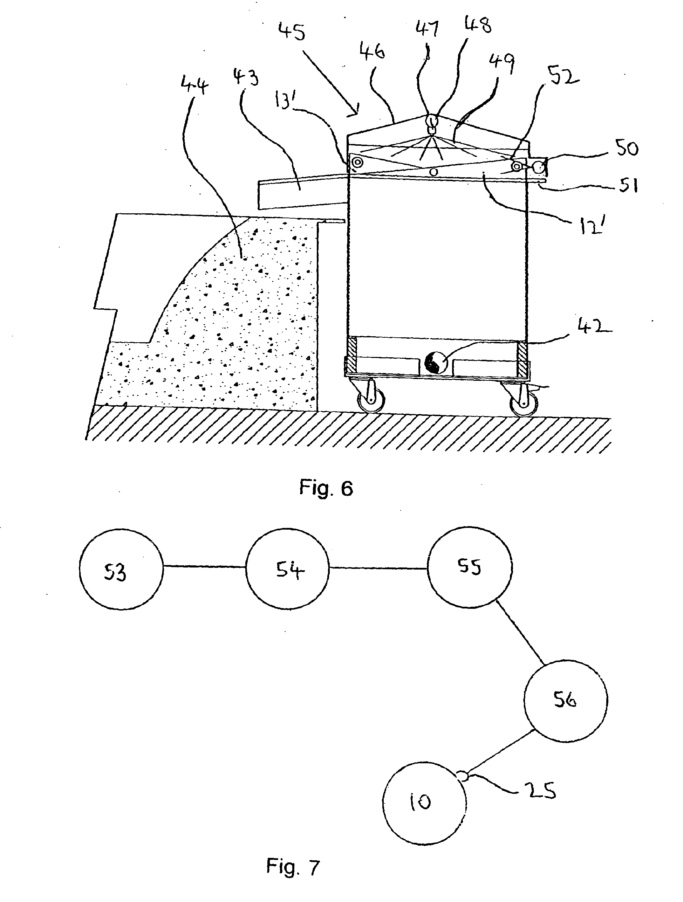

Referring to Fig. 6, in operation, the liquid to be processed is introduced to the reaction chamber 11 *via* an inlet 42. Typically, the liquid to be processed is filtered prior to introduction to the reaction chamber 11 in order to remove large particulates. The most relevant factors in determining the amount of voltage and current to be applied to the cell 10 are the flow rate of the liquid entering the reaction chamber 11 and the concentration of contaminants contained therein. The flow rate of the liquid entering the reaction chamber 11 is measured and controlled by an orifice plate (not shown) located upstream of the inlet 42.

Current is initially passed via the aluminium feeder bushes 23 and the electrically conductive bushes 16 to each electrode 12' of the first set of electrodes 12. As current is passed through each electrode 12' of the first set of electrodes 12, the metal (M) is oxidised to its cation (Mⁿ⁺) (Equation 1). Simultaneously, water is reduced to hydrogen gas and the hydroxyl ion (OH⁻) at each electrode 13' of the second set of electrodes 13 (Equation 2). The polarity of each set of electrodes 12 and 13 respectively, is reversed periodically such that the anodic reaction (Equation 1) occurs at each electrode 13' of the second set of electrodes 13 and the cathodic reaction (Equation 2) occurs at each electrode 12' of the second set of electrodes 12. Electrocoagulation thus introduces metal cations *in situ* using sacrificial anodes, typically aluminium or iron.

M → Mⁿ⁺ ne⁻ (1)

2H₂O + 2^{e-} → 20H⁻ + H₂ (2)

Highly charged cations destabilize any colloidal particles by the formation of polyvalent polyhydroxide complexes. These complexes have high adsorption properties, forming aggregates with pollutants. Evolution of hydrogen gas aids in the mixing and creates a flotation effect removing the coagulated pollutants to the surface.

The flow of liquid through the reaction chamber 11 is in an upward direction and the liquid passes out of the reaction chamber 11 *via* an exit chute 43 into a collection vessel 44. The flow rate of the liquid through the reaction chamber 11 is usually fast enough to carry all of the coagulated particles into the collection vessel 44. The liquid is then moved to a secondary separation treatment point where, depending on the volume of liquid involved, the coagulated particles can be removed from the liquid by clarification techniques known in the art, for example, gravity sedimentation, centrifugal sedimentation, filtration, and magnetic separation.

The reaction chamber 11 is connectable to a spray system, shown generally at 45, used to suppress any foaming of liquid contained in the reaction chamber 11 during use. The spray system 45 has a hood 46 and spray head 47. The spray head 47 is screwed into a section of plastic piping 48 that runs along the apex of the hood 46. The section of plastic piping 48 is connectable to a water mains and flow of water through the spray head 47 causes water to be sprayed over the reaction chamber 11 I as indicated by water spray 49, thereby suppressing foaming of liquid contained therein. The reaction chamber 11 is also connectable to a further section of plastic piping 50 having a multitude of apertures along its length and sealed at one end. The section of plastic piping 50 is disposed on a lip 51 of the reaction chamber 11 and is covered by the hood 46 of the spray system 45. The section of plastic piping 50 is connectable to a water mains and flow of water through the apertures along its length causes water to be sprayed over the reaction chamber 11 as indicated by water spray 52, aiding suppression of the foaming of the liquid contained therein and directing the foam toward the exit chute 43. In general, the water mains is supplied with recycled water from the electrocoagulation process.

Referring to Fig. 7, there is shown a diagrammatic representation of a power supply for the electrocoagulation cell 10. The power supply is fed with a three phase alternating current input 53. The voltage and current applied to the electrocoagulation cell 10 is adjusted according to the flow rate of the liquid to be processed, the type and concentration of contaminants, and the physical size of the electrocoagulation cell 10. The requisite information is assimilated by a Programmable Logic Controller (PLC) 54 and the voltage and current applied to the electrocoagulation cell 10 is automatically adjusted by the PLC 54. The adjusted voltage and current are applied to a transformer 55 for stepping up or stepping down the voltage as may be required. A rectifier 56 takes alternating current from the transformer 55, rectifies it, and provides direct current to the electrical connector 25 of the electrocoagulation cell 10.

The rectifier 56 is a thyristor controlled rectifier (TCR). To provide for uniform corrosion of the electrodes 12' and 13' and to clear the electrodes 12' and 13' of any deposits and unwanted gasses, the current from the rectifier 56 is reversed at selected time intervals.

Referring back to Fig. 5, the positive terminal of the rectifier 56 is connected to the electrical connectors 25 disposed at either end 41 of the tie-bar 19, which passes through the first set of electrodes 12, and the negative terminal of the rectifier 56 is connected to the electrical connectors 25 disposed at either end 41 of the tie-bar 19, which passes through the second set of electrodes 13. Thus, current is passed into the electrocoagulation cell 10 at both ends of the tie-bar 19 on the left-hand side and is removed from the electrocoagulation cell 10 from both ends of the tie-bar 19 on the right-hand side. At pre-set time intervals the polarity of the electrocoagulation cell 10 is reversed.

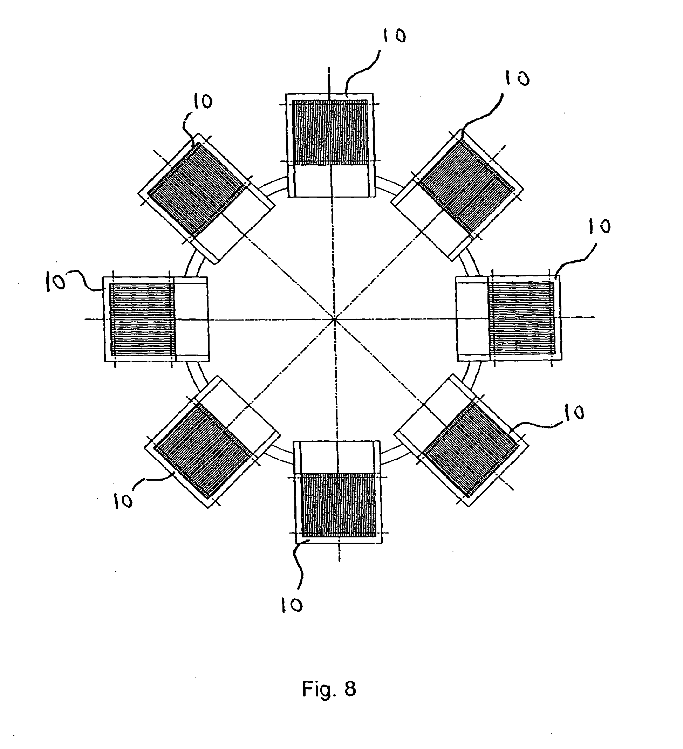

Fig. 8 is a plan view from above of a further embodiment of the invention, in which eight electrocoagulation cells 10 are connected together in use. The electrocoagulation cells 10 are connected in hydraulic parallel. This is particularly useful where a large or continuous volume of liquid is to be treated.

The invention will be further illustrated by the following Examples.

### Example 1

An electrocoagulation cell 10 as illustrated in Fig. 1, having a first set of twenty-one aluminium electrodes 12' and a second set of twenty aluminium electrodes 13' was assembled as described above and connected to the spray system 45. The electrocoagulation cell 10 was connected to the rectifier 56. The positive terminal of the rectifier 56 was connected to the electrical connectors 25 disposed at either end of the first tie-bar 19 and the negative terminal of the rectifier 56 was connected to the electrical connectors 25 disposed at either end of the second tie-bar 19.

800 amps of current were passed into the electrocoagulation cell 10, 400 amps via the aluminium feeder bush 23 disposed at one end of the first tie-bar 19 and 400 amps via the aluminium feeder bush 23 disposed at the other end of the first tie-bar 19, with each electrode 12' disposed on the first tie-bar 19 drawing a current of 40 amps via the electrically conductive bushes 16 disposed therebetween. Current passed from the anodic electrodes to the cathodic electrodes and was removed from the electrocoagulation cell 10 from both ends of the second tie-bar 19.

8m³ *per* hour of effluent from a glass cutting operation was pumped through the electrocoagulation cell 10. The effluent contained 800-1000mg *per* litre of ground glass in suspension and 40-60mg *per* litre of dissolved lead. The electrocoagulation cell 10 was operated continuously for 108 hours and the polarity of electrocoagulation cell 10 was reversed every ten minutes.

The liquor discharged from the cell 10 into the collection vessel 44 was treated with polyelectrolyte and allowed to settle. The clear supernatant liquor was analysed and contained approximately 10mg *per* litre of suspended solids and 0.2mg *per* litre of dissolved lead.

During the electrocoagulation process, the voltage drops from the aluminium feeder bushes 23 to the electrically conductive bushes 16 located at approximately the centre of the tie-bars 19 were monitored. The voltage drops were in the range of 0.33 to 0.45 volts, indicating that there was good electrical contact between each electrically conductive bush 16 and the adjacent electrodes of the same set.

### Example 2

Four electrocoagulation cells 10, each having a first set of twenty-one aluminium electrodes 12' and a second set of twenty aluminium electrodes 13', were assembled as described above, connected to the spray system 45 and arranged in electrical series and hydraulic parallel, in the same manner as the electrocoagulation cells 10 of Fig 8.

The positive terminal of the rectifier 56 was connected to the electrical connectors 25 disposed at either end of a tie-bar 19 of a first electrocoagulation cell 10. The electrical connectors 25 disposed at either end of the other tie-bar 19 of the first electrocoagulation cell were connected to the electrical connection means 25 disposed at either end of a tie-bar 19 of a second electrocoagulation cell 10. The second electrocoagulation cell 10 was connected to the third electrocoagulation cell 10 and the third electrocoagulation cell 10 to the fourth electrocoagulation cell 10 in like fashion. The electrical connectors 25 of the fourth electrocoagulation cell 10 not connected to the third electrocoagulation cell 10 were connected to the negative terminal of the rectifier 50.

The four electrocoagulation cells 10 were connected in hydraulic parallel so that the total flow of the liquid to be processed was split evenly between the four cells 10. The amount of current passed into the cells 10 varied between 300 and 900 amps due to the varying flow rate of the liquid into the cells 10.

The current was passed into the first electrocoagulation cell 10 in the manner described in Example 1 and thereafter passed through the second, third and fourth electrocoagulation cells 10 and back to the rectifier 56 via the electrical connectors 25 of the fourth electrocoagulation cell 10 not connected to the third electrocoagulation cell 10.

16-39m³ *per* hour of effluent from a glass cutting operation was pumped through the cells 10. The effluent contained 800-1000mg *per* litre of ground glass in suspension and 40-60mg *per* litre of dissolved lead. The electrocoagulation cells 10 were operated continuously for 24 days and the polarity of electrocoagulation cells 10 was reversed every ten minutes.

The liquor discharged from the electrocoagulation cells 10 into the collection vessel 44 was treated with polyelectrolyte and pumped to a continuous clarifier. The clear supernatant liquor was analysed and contained approximately 10mg *per* litre of suspended solids and 0.2mg *per* litre of dissolved lead.

During the electrocoagulation process, the voltage drops from the aluminium feeder bushes 23 to the electrically conductive bushes 16 located at approximately the centre of the tie-bars 19 were monitored. The voltage drops were in the range of 0.3 to 0.8 volts, indicating that the good electrical contact between the electrically conductive bushes 16 and the adjacent electrodes of the same set was maintained over the course of the 24 days. When the electrocoagulation cells 10 were stripped down at the end of the electrolysis, no corrosion of the electrically conductive bushes 16 was evident and these bushes 16 were re-used.

### Example 3

Four electrocoagulation cells 10, each having a first set of twenty-one aluminium electrodes 12' and a second set of twenty aluminium electrodes 13', were assembled as described above, connected to the spray system 45 and arranged in electrical series and hydraulic parallel, in the same manner as the electrocoagulation cells 10 of Fig 8. The amount of current passed into the electrocoagulation cells 10 varied between 400 and 450 amps due to the varying flow rate of the liquid into the cells 10. The current was passed into and through the electrocoagulation cells 10 in the manner described in Example I and Example 2.

36-39m³ *per* hour of effluent from a glass cutting operation was pumped through the electrocoagulation cells 10. The effluent contained 800-1000mg *per* litre of ground glass in suspension and 40-60mg *per* litre of dissolved lead. The electrocoagulation cells 10 were operated continuously for 22 days and the polarity of electrocoagulation cells 10 was reversed every ten minutes.

The liquor discharged from the cell 10 into the collection vessel 44 was treated with polyelectrolyte and pumped to a continuous clarifier. The clear supernatant liquor was analysed and contained approximately 10mg *per* litre of suspended solids and 0.6mg *per* litre of dissolved lead.

During the electrocoagulation process, the voltage drops from the aluminium feeder bushes 23 to the electrically conductive bushes 16 located at approximately the centre of the tie-bars 19 were monitored. The voltage drops were in the range of 0.2 to 0.3 volts, indicating that the good electrical contact between the electrically conductive bushes 16 and the adjacent electrodes of the same set was maintained over the course of the 22 days. When the electrocoagulation cells 10 were stripped down at the end of the electrolysis, no corrosion of the electrically conductive bushes 16 was evident and these bushes 16 were re-used.

## Claims

1. An electrocoagulation cell (10) comprising a reaction chamber (11), a first and second set of electrodes (12, 13) disposed within the reaction chamber (11) such that the first set of electrodes (12) is interleaved with the second set of electrodes (13), an electrically conductive bush (16) being disposed between each pair of adjacent electrodes of the same set, the electrodes and electrically conductive bushes of the same set being held in electrical contact with one another by a tie-bar (19) which is extendable through an aperture in each electrode and a co-aligned aperture in each electrically conductive bush, the first set of electrodes (12) being connectable by electrical connection means (25) disposed at the or each end of the tie-bar (19) to one pole of an electrical power supply, the second set of electrodes (13) being connectable by electrical connection means (25) disposed at the or each end of the tie-bar (19) to the opposite pole of the power supply and the conductive bushes (16) being positioned relative to the electrodes so as to avoid contact with liquid contained in the reaction chamber in use.

2. An electrocoagulation cell according to Claim 1, wherein a tightening means (14) is disposed at either or both ends of the tie-bar (19), which, in use, forces the electrodes (12, 13) against the electrically conductive bushes (16) thereby increasing the electrical contact between the electrodes (12, 13) and the electrically conductive bushes (16) disposed therebetween.

3. An electrocoagulation cell according to Claim 2, wherein the tension in the tie-bar (19) is maintained by pressure bushes (26) separated by spring washers (28, 29).

4. An electrocoagulation cell according to any preceding claim, wherein an additional electrical connection means is disposed at a point along the tie-bar (19).

5. An electrocoagulation cell according to any preceding claim, wherein the first and second sets of electrodes (12, 13) are disposed within the reaction chamber (11) in spaced and parallel relationship relative to one another.

6. An electrocoagulation cell according to Claim 5, wherein the first and second sets of electrodes (12, 13) are maintained in spaced and parallel relationship relative to one another by non-conductive spacers (14, 15) fitted to the electrodes of either the first or second set of electrodes.

7. An electrocoagulation cell according to Claim 6, wherein each non-conductive spacer comprises a nut (14) and bolt (15), the bolt (15) being extendable through a further aperture in an electrode and fastenable by the nut (14), such that the head of the bolt (15) acts as a spacer on one side of the electrode and the nut acts as a spacer on the other side of the electrode.

8. An electrocoagulation cell according to any preceding claim, wherein both sets of electrodes (12, 13) are supported on a non-conductive rod (20) which is extendable through a further aperture in each electrode.

9. An electrocoagulation cell according to any preceding claim, wherein the contact surfaces of each bush (16) are coatable with contact grease.

10. An electrocoagulation cell according to any preceding claim, wherein the exposed surface of each bush (16) is covered by a shield (18).

11. An electrocoagulation cell according to any preceding claim, wherein the electrical power supply is connectable to conversion means, in particular a rectifier, to allow reversal of the polarity of each set of electrodes.

12. An electrocoagulation cell according to Claim 11, wherein the polarity of each set of electrodes (12, 13) is reversed at time intervals which are determined by relative rates of corrosion of the sets of electrodes.

13. An electrocoagulation cell according to Claim 12, wherein the time intervals are equal when the first and second sets of electrodes (12, 13) are constructed from the same material.

14. An electrocoagulation cell according to Claim 12, wherein the time intervals can vary when the first and second sets of electrodes (12, 13) are constructed from different materials.

15. An electrocoagulation cell according to any preceding claim, wherein the reaction chamber (11) connectable to a spray system used to suppress foaming of liquid contained in the reaction chamber during use.

## Patentansprüche

1. Elektrokoagulationszelle (10), umfassend eine Reaktionskammer (11), eine erste und eine zweite Gruppe von Elektroden (12, 13), die so in der Reaktionskammer (11) angeordnet sind, dass die erste Gruppe von Elektroden (12) mit der zweiten Gruppe von Elektroden (13) verzahnt ist, wobei zwischen jedem Paar von benachbarten Elektroden derselben Gruppe eine elektrisch leitende Buchse (16) angeordnet ist, wobei die Elektroden und die elektrisch leitenden Buchsen derselben Gruppe durch eine Zugstange (19) in elektrischem Kontakt miteinander gehalten werden, die sich durch eine Öffnung in jeder Elektrode und eine damit ausgerichtete Öffnung in jeder elektrisch leitenden Buchse hindurch führen lässt, wobei die erste Gruppe von Elektroden (12) durch elektrische Verbindungsmittel (25), die an dem oder jedem Ende der Zugstange (19) angeordnet sind, mit einem Pol einer elektrischen Stromversorgung verbindbar ist, wobei die zweite Gruppe von Elektroden (13) durch elektrische Verbindungsmittel (25), die an dem oder jedem Ende der Zugstange (19) angeordnet sind, mit dem entgegengesetzten Pol der Stromversorgung verbindbar ist, und wobei die leitenden Buchsen (16) in Bezug zu den Elektroden so angeordnet sind, dass im Gebrauch ein Kontakt mit in der Reaktionskammer enthaltener Flüssigkeit vermieden wird.

2. Elektrokoagulationszelle nach Anspruch 1, wobei ein Spannmittel (14) an einem der beiden oder beiden Enden der Zugstange (19) angeordnet ist, das im Gebrauch die Elektroden (12, 13) gegen die elektrisch leitenden Buchsen (16) drückt, wodurch der elektrische Kontakt zwischen den Elektroden (12, 13) und den dazwischen angeordneten elektrisch leitenden Buchsen (16) verstärkt wird.

3. Elektrokoagulationszelle nach Anspruch 2, wobei die Zugspannung in der Zugstange (19) durch Druckbuchsen (26) aufrechterhalten wird, die durch Federscheiben (28, 29) getrennt sind.

4. Elektrokoagulationszelle nach einem vorangehenden Anspruch, wobei ein zusätzliches elektrisches Verbindungsmittel an einer Stelle entlang der Zugstange (19) angeordnet ist.

5. Elektrokoagulationszelle nach einem vorangehenden Anspruch, wobei die erste und die zweite Gruppe von Elektroden (12, 13) innerhalb der Reaktionskammer (11) in Bezug zueinander in beabstandeter und paralleler Beziehung angeordnet sind.

6. Elektrokoagulationszelle nach Anspruch 5, wobei die erste und die zweite Gruppe von Elektroden (12, 13) durch nicht-leitende Abstandhalter (14, 15), die an den Elektroden von entweder der ersten oder der zweiten Gruppe von Elektroden angebracht sind, in Bezug zueinander in beabstandeter und paralleler Beziehung gehalten werden.

7. Elektrokoagulationszelle nach Anspruch 6, wobei jeder nicht-leitende Abstandhalter eine Mutter (14) und eine Schraube (15) umfasst, wobei sich die Schraube (15) durch eine weitere Öffnung in einer Elektrode hindurch führen und mittels der Mutter (14) befestigen lässt, so dass der Kopf der Schraube (15) auf einer Seite der Elektrode als Abstandhalter wirkt und die Mutter auf der anderen Seite der Elektrode als Abstandhalter wirkt.

8. Elektrokoagulationszelle nach einem vorangehenden Anspruch, wobei beide Gruppen von Elektroden (12, 13) auf einer nicht-leitenden Stange (20) abgestützt sind, die sich durch eine weitere Öffnung in jeder Elektrode hindurch führen lässt.

9. Elektrokoagulationszelle nach einem vorangehenden Anspruch, wobei die Kontaktflächen von jeder Buchse (16) mit Kontaktfett beschichtbar sind.

10. Elektrokoagulationszelle nach einem vorangehenden Anspruch, wobei die freiliegende Oberfläche von jeder Buchse (16) von einer Abschirmung (18) bedeckt ist.

11. Elektrokoagulationszelle nach einem vorangehenden Anspruch, wobei die elektrische Stromversorgung mit Umwandlungsmitteln, insbesondere einem Gleichrichter, verbindbar ist, um eine Umkehr der Polarität von jeder Gruppe von Elektroden zu ermöglichen.

12. Elektrokoagulationszelle nach Anspruch 11, wobei die Polarität von jeder Gruppe von Elektroden (12, 13) in Zeitintervallen umgekehrt wird, die durch relative Korrosionsgeschwindigkeiten der Gruppen von Elektroden bestimmt werden.

13. Elektrokoagulationszelle nach Anspruch 12, wobei die Zeitintervalle gleich sind, wenn die erste und die zweite Gruppe von Elektroden (12, 13) aus demselben Material ausgeführt sind.

14. Elektrokoagulationszelle nach Anspruch 12, wobei die Zeitintervalle variieren können, wenn die erste und die zweite Gruppe von Elektroden (12, 13) aus verschiedenen Materialien ausgeführt sind.

15. Elektrokoagulationszelle nach einem vorangehenden Anspruch, wobei die Reaktionskammer (11) mit einem Sprühsystem verbindbar ist, das benutzt wird, um während des Gebrauchs ein Aufschäumen von in der Reaktionskammer enthaltener Flüssigkeit zu unterdrücken.

## Revendications

1. Cellule d'électrocoagulation (10) comprenant une chambre de réaction (11), un premier et un second ensembles d'électrodes (12, 13) placées dans la chambre de réaction (11) de sorte que le premier ensemble d'électrodes (12) est entrelacé avec le second ensemble d'électrodes (13), une bague conductrice d'électricité (16) étant placée entre chaque paire d'électrodes adjacentes du même ensemble, les électrodes et bagues conductrices d'électricité du même ensemble étant maintenues en contact électrique les unes aux autres par une barre de liaison (19) qui est extensible à travers une ouverture dans chaque électrode et une ouverture co-alignée dans chaque bague conductrice d'électricité, le premier ensemble d'électrodes (12) étant connectable par des moyens (25) de connexion électrique placés sur la ou chaque extrémité de la barre de liaison (19) en un pôle d'une alimentation électrique, le second ensemble d'électrodes (13) étant connectable par des moyens (25) de connexion électrique placés sur la ou chaque extrémité de la barre de liaison (19) au pôle opposé de l'alimentation électrique et les bagues conductrices (16) étant positionnées relativement aux électrodes de manière à éviter tout contact avec un liquide contenu dans la chambre de réaction en utilisation.

2. Cellule d'électrocoagulation (10) selon la revendication 1, dans laquelle un moyen de serrage (14) est placé sur l'une ou l'autre ou les deux extrémités de la barre de liaison (19), qui, en utilisation, applique les électrodes (12, 13) contre les bagues conductrices d'électricité (16), augmentant de cette façon le contact électrique entre les électrodes (12, 13) et les bagues conductrices d'électricité (16) placées entre elles.

3. Cellule d'électrocoagulation (10) selon la revendication 2, dans laquelle la tension dans la barre de liaison (19) est maintenue par des bagues de pression (26) séparées par des rondelles (28, 29).

4. Cellule d'électrocoagulation selon l'une quelconque des revendications précédentes, dans laquelle un moyen supplémentaire de connexion électrique est placé sur un point le long de la barre de liaison (19).

5. Cellule d'électrocoagulation selon l'une quelconque des revendications précédentes, dans laquelle les premier et second ensembles d'électrodes (12, 13) sont placés dans la chambre de réaction (11) respectivement espacés et parallèles l'un à l'autre.

6. Cellule d'électrocoagulation selon la revendication 5, dans laquelle les premier et second ensembles d'électrodes (12, 13) sont maintenus en relation espacée et parallèle l'un à l'autre par des entretoises non conductrices (14, 15) montées sur les électrodes soit du premier, soit du second ensemble d'électrodes.

7. Cellule d'électrocoagulation selon la revendication 6, dans laquelle chaque entretoise non-conductrice comprend un écrou (14) et un boulon (15), le boulon étant extensible par le biais d'une ouverture dans une électrode et fixable par l'écrou (14), de sorte que la tête du boulon (15) agit comme une entretoise sur un coté de l'électrode et que l'écrou agit comme une entretoise sur l'autre coté de l'électrode.

8. Cellule d'électrocoagulation selon l'une quelconque des revendications précédentes, dans laquelle les deux ensembles d'électrodes (12, 13) sont appuyés sur une tige non conductrice (20) qui est extensible à travers une autre ouverture dans chaque électrode.

9. Cellule d'électrocoagulation selon l'une quelconque des revendications précédentes, dans laquelle les surfaces de contact de chaque bague (16) sont recouvrables de graisse de contact.

10. Cellule d'électrocoagulation selon l'une quelconque des revendications précédentes, dans laquelle la surface exposée de chaque bague (16) est recouverte par une protection (18).

11. Cellule d'électrocoagulation selon l'une quelconque des revendications précédentes, dans laquelle l'alimentation électrique est connectable à des moyens de conversion, en particulier un redresseur, pour permettre une inversion de la polarité de chaque ensemble d'électrodes.

12. Cellule d'électrocoagulation selon la revendication 11, dans laquelle la polarité de chaque ensemble d'électrodes (12, 13) est inversée à des intervalles de temps qui sont déterminés par des taux relatifs de corrosion des ensembles d'électrodes.

13. Cellule d'électrocoagulation selon la revendication 12, dans lequel les intervalles de temps sont égaux quand les premier et second ensembles d'électrodes (12, 13) sont construits à partir du même matériau.

14. Cellule d'électrocoagulation selon la revendication 12, dans lequel les intervalles de temps peuvent varier quand les premier et second ensembles d'électrodes (12, 13) sont construits à partir de matériaux différents.

15. Cellule d'électrocoagulation selon l'une quelconque des revendications précédentes, dans laquelle la chambre de réaction (11) est connectable à un système de pulvérisation utilisé pour supprimer la mousse d'un liquide contenu dans la chambre de réaction pendant l'utilisation.
